# EUROPEAN PATENT APPLICATION

(11) **EP 4 117 084 A1**
(43) Date of publication of application: **11.01.2023**
(21) Application number: 21931964.7
(22) Date of filing: 12.11.2021
(51) Int. Cl.: H01M 10/54, H01M 4/505, H01M 4/525

(54) **RECYCLING METHOD FOR NICKEL-COBALT-MANGANESE POSITIVE ELECTRODE MATERIAL AND WASTE NICKEL-COBALT-MANGANESE POSITIVE ELECTRODE MATERIAL**

(30) Priority: 11.05.2021 CN 202110509993
(71) Applicant: SVOLT ENERGY TECHNOLOGY CO., LTD, Changzhou, Jiangsu 213200 (CN)
(72) Inventor: WAN, Jiangtao, Changzhou, Jiangsu 213200 (CN); ZHANG, Ning, Changzhou, Jiangsu 213200 (CN); ZHANG, Yongjie, Changzhou, Jiangsu 213200 (CN); LIU, Manku, Changzhou, Jiangsu 213200 (CN); LI, Zitan, Changzhou, Jiangsu 213200 (CN)
(74) Representative: V.O.
(86) International application number: PCT/CN2021/130420
(87) International publication number: WO 2022/237102

(57) **Abstract**

Provided are a nickel-cobalt-manganese cathode electrode material and a recovery method for a waste nickel-cobalt-manganese cathode electrode material. The recovery method includes: the waste nickel-cobalt-manganese cathode electrode material is crushed, to obtain a granular material; the granular material is used as a crystal seed, and a precipitation reaction is performed in solution containing a nickel source, a cobalt source and a manganese source, to obtain a nickel-cobalt-manganese precursor; and the surface of the nickel-cobalt-manganese precursor is coated with a lithium source, to form a new nickel-cobalt-manganese ternary cathode electrode material. The above recovery method may not only shorten the recovery process of the waste nickel-cobalt-manganese cathode electrode material, reduce the cost, but also improve the electrical properties such as the discharge capacity and cycle performance of the new nickel-cobalt-manganese ternary cathode electrode material.

## Description

### Technical Field

The present disclosure relates to the field of recovery for waste nickel-cobalt-manganese ternary cathode electrode materials, in particular to a nickel-cobalt-manganese cathode electrode material and a recovery method for a waste nickel-cobalt-manganese cathode electrode material.

### Background

A nickel-cobalt-manganese ternary cathode electrode material (NCM ternary cathode electrode material) is long widely used in the field of lithium batteries. Correspondingly, various waste lithium-ion batteries are also gradually increased, and this requires reasonable recovery of the waste lithium-ion batteries.

At present, there are many processes for recovering the waste lithium-ion batteries, and a commonly used method is as follows:
(1) After a battery is disassembled, valuable metals are dissolved by a wet method, to prepare crystals of a nickel sulfate, a cobalt sulfate, a manganese sulfate and the like and a lithium carbonate raw material; these raw materials are used to synthesize a new precursor, and finally a lithium carbonate or a lithium hydroxide is added to the new precursor and sintering is performed for one time, two times or three times, to finally obtain an ideal cathode electrode ternary material, and it is assembled into the battery. This process may meet the complete reparative regeneration of the NCM ternary cathode electrode material, but there are many flows, and the cost of regeneration is also high.
(2) A certain amount of a lithium hydroxide or lithium carbonate source is directly added to disassembled cathode electrode powder for reparative-sintering to achieve the regeneration. However, since the morphology and crack and the like may not be completely repaired by this method, the capacity of an obtained new material is reduced, and the cycle performance is poor, and the complete reparative regeneration may not be achieved.

In view of the existence of the above problems, it is necessary to provide a recovery method for a waste nickel-cobalt-manganese cathode electrode material with the short process and low cost, and the prepared new ternary cathode electrode material is high in discharge capacity and good in cycle performance.

### Summary

A main purpose of the present disclosure is to provide a nickel-cobalt-manganese cathode electrode material and a recovery method for a waste nickel-cobalt-manganese cathode electrode material, as to solve problems of an existing recovery for the waste nickel-cobalt-manganese cathode electrode material that the process is long, the cost is high, and a prepared new ternary cathode electrode material is low in discharge capacity and poor in cycle performance.

In order to achieve the above purpose, one aspect of the present disclosure provides a recovery method for a waste nickel-cobalt-manganese cathode electrode material. The recovery method for the waste nickel-cobalt-manganese cathode electrode material includes: crushing the waste nickel-cobalt-manganese cathode electrode material, to obtain a granular material; using the granular material as a crystal seed, and performing a precipitation reaction in solution containing a nickel source, a cobalt source and a manganese source, to obtain a nickel-cobalt-manganese precursor; and coating the surface of the nickel-cobalt-manganese precursor with a lithium source, to form a new nickel-cobalt-manganese ternary cathode electrode material.

Further, after the crushing process, the particle size of the granular material is 1~5 pm; and the recovery method for the waste nickel-cobalt-manganese cathode electrode material further includes: disassembling and peeling a ternary cathode electrode piece, as to remove one or more in a group consisting of a carbon material, a diaphragm, an electrolyte and a binder contained in the ternary cathode electrode piece, to obtain the waste nickel-cobalt-manganese cathode electrode material.

Further, the process of disassembling and peeling includes: performing first calcination treatment on the ternary cathode electrode piece, to obtain the waste nickel-cobalt-manganese cathode electrode material; and the temperature of the first calcination treatment is 500~700°C, and the time is 2-8 h.

Further, the process of disassembling and peeling includes: performing acid dissolution peeling on a product of the first calcination treatment, to obtain the waste nickel-cobalt-manganese cathode electrode material; the acid dissolution peeling process includes enabling the product of the first calcination treatment to react with a sulfuric acid and a hydrogen peroxide; and the concentration of the sulfuric acid is 98wt%, and the addition amount is 1~5% of the product of the first calcination treatment; the concentration of the hydrogen peroxide is 30wt%, the amount is 1~5vol% of the total volume of a reaction system of the acid dissolution peeling, and the temperature of the acid dissolution peeling is 40~60°C.

Further, the precipitation process includes: preparing the granular material and water into 50-200 g/L of a slurry, and adjusting pH thereof to 10-11; using sodium hydroxide and ammonia water as precipitants, performing a precipitation reaction on the slurry and the solution containing the nickel source, the cobalt source and the manganese source, to obtain the nickel-cobalt-manganese precursor, and the molar ratio of the nickel source, the cobalt source and the manganese source is the same as the molar ratio of nickel, cobalt, and manganese in the granular material; and the ratio of the granular material, the total mole number of nickel, cobalt and manganese elements in the solution containing the nickel source, the cobalt source and the manganese source, the sodium hydroxide and the ammonia water is (50~200) g: (0.5~2) mol: (5~10) mol: (8~12) mol.

Further, the temperature of the precipitation reaction is 30~75°C, and the reaction time is 20~120 h.

Further, the lithium source coating process includes: performing aging treatment on the nickel-cobalt-manganese precursor, a lithium hydroxide and a soluble carbonate, to obtain the new nickel-cobalt-manganese ternary cathode electrode material.

Further, a preparation method for the new nickel-cobalt-manganese ternary cathode electrode material further includes: performing second calcination treatment on the nickel-cobalt-manganese precursor coated by the lithium source and a dopant, to obtain a doped product; and performing third calcination treatment on the doped product and an aluminum oxide, to obtain the new nickel-cobalt-manganese ternary cathode electrode material.

Further, the dopant is selected from one or more in a group consisting of a zinc oxide, a titanium oxide, a scandium oxide, an aluminum oxide, a magnesium oxide and a gallium oxide; calculated in weight percentage content accounting for the nickel-cobalt-manganese precursor coated by the lithium source, the usage amount of the dopant is 0.05~2%; and in the third calcination treatment, calculated in weight percentage content accounting for the nickel-cobalt-manganese precursor coated by the lithium source, the usage amount of the aluminum oxide is 0.05~2%.

In another aspect, the present application further provides a nickel-cobalt-manganese cathode electrode material, the nickel-cobalt-manganese cathode electrode material includes: an inner core layer, a first coating layer and a second coating layer, the first coating layer is coated on the surface of the inner core layer, and the second coating layer is coated on the surface of the first coating layer; herein, the inner core layer is a waste nickel-cobalt-manganese cathode electrode material, the first coating layer is a nickel-cobalt-manganese ternary hydroxide precursor, and the second coating layer is a lithium source coating layer; or the nickel-cobalt-manganese cathode electrode material is prepared by the above recovery method for the waste nickel-cobalt-manganese cathode electrode material.

A technical scheme of the present disclosure is applied, by the above recovery method, the new nickel-cobalt-manganese ternary cathode electrode material using the waste nickel-cobalt-manganese cathode electrode material as the core layer material, using the nickel-cobalt-manganese ternary hydroxide precursor as the first coating layer and using the lithium source coating layer as the second coating layer was prepared. Therefore, the above recovery method may be used to repair the waste nickel-cobalt-manganese cathode electrode material with the defects such as the crack in the morphology, thereby it is beneficial to improve the discharge capacity and cycle performance thereof. At the same time, the above recovery method also has the characteristics of short process and low cost and the like. In conclusion, the above recovery method may not only shorten the recovering process of the waste nickel-cobalt-manganese cathode electrode material, reduce the cost, but also improve the electrical properties such as the discharge capacity and the cycle performance of the new nickel-cobalt-manganese ternary cathode electrode material.

### Detailed Description of the Embodiments

It should be noted that embodiments in the present application and features of the embodiments may be combined with each other in the case without conflicting. The present disclosure is described in detail below with reference to the embodiments.

As described in the background, an existing recovery method for a waste nickel-cobalt-manganese cathode electrode material has problems that the process is long, the cost is high, and a prepared new ternary cathode electrode material is low in discharge capacity and poor in cycle performance. In order to solve the above technical problems, the present application provides a recovery method for a waste nickel-cobalt-manganese cathode electrode material. The recovery method for the waste nickel-cobalt-manganese cathode electrode material includes: crushing the waste nickel-cobalt-manganese cathode electrode material, to obtain a granular material; using the granular material as a crystal seed, and performing a precipitation reaction in solution containing a nickel source, a cobalt source and a manganese source, to obtain a nickel-cobalt-manganese precursor; and coating the surface of the nickel-cobalt-manganese precursor with a lithium source, to form a new nickel-cobalt-manganese ternary cathode electrode material.

Since the waste nickel-cobalt-manganese cathode electrode material is a brittle material generally, it is easily crushed. At the same time, the particle size of the waste nickel-cobalt-manganese cathode electrode material is relatively large, and it needs to be crushed to obtain the granular material suitable for the crystal seed. The granular material obtained after crushing is used as the crystal seed, and then a new nickel-cobalt-manganese precipitate is coated on the surface of the crystal seed by the precipitation reaction, to form a new precursor. Then, the surface of the above new precursor is coated with the lithium source, to obtain the new nickel-cobalt-manganese ternary cathode electrode material.

By the above recovery method, the new nickel-cobalt-manganese ternary cathode electrode material using the waste nickel-cobalt-manganese cathode electrode material as the core layer material, using the nickel-cobalt-manganese ternary hydroxide precursor as the first coating layer and using the lithium source coating layer as the second coating layer was prepared. Therefore, the above recovery method may be used to repair the waste nickel-cobalt-manganese cathode electrode material with the defects such as the crack in the morphology, thereby it is beneficial to improve the discharge capacity and cycle performance thereof. At the same time, the above recovery method also has the characteristics of short process and low cost and the like. In conclusion, the above recovery method may not only shorten the recovering process of the waste nickel-cobalt-manganese cathode electrode material, reduce the cost, but also improve the electrical properties such as the discharge capacity and the cycle performance of the new nickel-cobalt-manganese ternary cathode electrode material.

In a preferred embodiment, after the crushing process, the particle size of the granular material is 1~5 pm. The particle size of the granular material includes but is not limited to the above range, it is limited within the above range, and it is beneficial to improve the coating uniformity of the nickel-cobalt-manganese precursor coating layer, and is also convenient to further improve the electrical properties of the nickel-cobalt-manganese cathode electrode material in the subsequent application process thereof.

In addition to the nickel-cobalt-nickel ternary cathode electrode material, a nickel-cobalt-nickel ternary cathode electrode piece further includes a carbon material, a diaphragm, an electrolyte, a binder and other substances. The existence of the above substances may affect the performance of a subsequently prepared cathode electrode material, so in order to remove the above substances, in a preferred embodiment, the recovery method for the waste nickel-cobalt-manganese cathode electrode material further includes: disassembling and peeling a ternary cathode electrode piece, as to remove one or more in a group consisting of the carbon material, the diaphragm, the electrolyte and the binder contained in the ternary cathode electrode piece, to obtain the waste nickel-cobalt-manganese cathode electrode material. Preferably, the process of disassembling and peeling includes: performing first calcination treatment on the ternary cathode electrode piece, to obtain the waste nickel-cobalt-manganese cathode electrode material. The above substances may be removed together by the calcination treatment, so the disassembling and peeling by the calcination process is a relatively economical and simple treatment method. Therefore, the use of the above method is beneficial to further shorten the process flow and reduce the cost of the process.

The above "carbon material" refers to a carbon-containing raw material such as carbon used in the electrode preparation process.

In order to further improve the removal rate of the carbon material, the diaphragm, the electrolyte, the binder and other substances, preferably, the temperature of the first calcination treatment is 500~700°C, and the time is 2~8 h.

Since the waste ternary cathode electrode material usually contains a certain amount of a doping layer and/or a coating layer of other substances. In order to reduce the influence of such substances on the performance of the subsequently prepared cathode electrode material, preferably, the process of dissembling and peeling includes: performing acid dissolution peeling on a product of the first calcination treatment, to obtain the waste nickel-cobalt-manganese cathode electrode material.

Since the doping layer and/or other impurities in the waste ternary cathode electrode material are oxides mostly, in a preferred embodiment, a sulfuric acid and a hydrogen peroxide are added in batches during the acid dissolution peeling process, and the product of the first calcination treatment reacts with the sulfuric acid and the hydrogen peroxide. The addition of the sulfuric acid may neutralize the oxides in the waste ternary cathode electrode material so as to remove it. For some insoluble oxides, the addition of the hydrogen peroxide may play a catalytic role, thereby it is beneficial to improve the reaction rate of the neutralization reaction and the removal rate of the oxides. The concentration and amount of the sulfuric acid and the hydrogen peroxide and the reaction temperature may be adjusted according to the needs, more preferably, the concentration of the sulfuric acid is 98wt%, and the addition amount is 1~5% of the product of the first calcination treatment; the concentration of the hydrogen peroxide is 30wt%, and the amount is 1~5 vol% of the total volume of a reaction system of the acid dissolution peeling; and the temperature of the acid dissolution peeling is 40~60°C.The temperature of the acid dissolution peeling, and the amounts of the sulfuric acid and the hydrogen peroxide are limited within the above ranges, it is beneficial to further improve the removal rate of the oxides in the waste ternary cathode electrode material.

A precipitant used in the above precipitation reaction may be selected from alkali metal hydroxides commonly used in the field, and the precipitation process may be performed by a method commonly used in the field. In a preferred embodiment, the precipitation process includes: preparing the granular material and water into 50~200 g/L of a slurry and adjusting pH thereof to 10-11; using sodium hydroxide and ammonia water as precipitants, performing a precipitation reaction on the slurry and the solution containing the nickel source, the cobalt source and the manganese source, to obtain the nickel-cobalt-manganese precursor, and the molar ratio of the nickel source, the cobalt source and the manganese source is the same as the molar ratio of nickel, cobalt, and manganese in the granular material.

The granular material is prepared into the slurry with a specific content, and pH thereof is limited within the above range, it is beneficial to improve the dispersion rate of the granular material during the precipitation process, and at the same time, it is beneficial to make the nickel-cobalt-manganese hydroxide coat the surface of the granular material more uniformly. The addition of the ammonia water in the precipitation process may make it complex with metal ions (the nickel source, the cobalt source and the manganese source), and then perform the precipitation reaction with the sodium hydroxide, the precipitation conversion rate of the nickel source, the cobalt source and the manganese source may be greatly improved, thereby the ratio of a nickel element, a cobalt element and a manganese element and the uniformity of the crystal phase structure in the subsequently formed nickel-cobalt-manganese cathode electrode material are guaranteed, and correspondingly the electrical properties thereof are improved. More preferably, the amount ratio of the granular material, the total mole number of nickel, cobalt and manganese elements in the solution containing the nickel source, the cobalt source and the manganese source, the sodium hydroxide and the ammonia water is (50~200) g: (0.5~2) mol: (5~10) mol: (8~12) mol.

In order to further improve the reaction rate and the precipitation conversion rate of the precipitation reaction, in a preferred embodiment, the temperature of the precipitation reaction is 30~75°C, and the reaction time is 20~120 h.

The above lithium source coating process may adopt a method commonly used in the field, such as a calcination method or a precipitation method. In a preferred embodiment, the lithium source coating process includes: performing aging treatment on the nickel-cobalt-manganese precursor, a lithium hydroxide and a soluble carbonate, to obtain the new nickel-cobalt-manganese ternary cathode electrode material. The lithium hydroxide and the soluble carbonate may react to form a lithium carbonate, and the lithium carbonate generated in the solution may coat the surface of the nickel-cobalt-manganese precursor during the aging process. The lithium carbonate coating process by the above method may avoid the introduction of other impurity elements, thereby it is beneficial to further improve the uniformity and electrical properties of the metal phase in the finally obtained nickel-cobalt-manganese cathode electrode material. Preferably, the weight ratio of the lithium hydroxide and the soluble carbonate is 1:1, and the addition amount of the two is 105~120% of a theoretical amount required for coating the nickel-cobalt-manganese precursor. While the theoretical amount of the lithium element is calculated, the cathode electrode material is represented by a general formula LiMO₂.

Preferably, the particle size of the above nickel-cobalt-manganese precursor is 9~11 pm.

In order to further improve the electrical properties of the nickel-cobalt-manganese cathode electrode material, the surface of the nickel-cobalt-manganese cathode electrode material may be coated. In a preferred embodiment, a preparation method for the new nickel-cobalt-manganese ternary cathode electrode material further includes: performing second calcination treatment on the nickel-cobalt-manganese precursor coated by the lithium source and a dopant, to obtain a doped product; and performing third calcination treatment on the doped product and an aluminum oxide, to obtain the new nickel-cobalt-manganese ternary cathode electrode material. The nickel-cobalt-manganese cathode electrode is doped, and coated with an aluminum oxide, it is beneficial to greatly improve the discharge capacity and the electric cycle performance of the cathode electrode material.

The doping amount of the dopant and the coating amount of the aluminum oxide may be changed according to the actual needs. More preferably, the dopant includes, but is not limited to, one or more in a group consisting of a zinc oxide, a titanium oxide, a scandium oxide, an aluminum oxide, a magnesium oxide and a gallium oxide; calculated in weight percentage content accounting for the nickel-cobalt-manganese precursor coated by the lithium source, the usage amount of the dopant is 0.05~2%; and in the third calcination treatment, calculated in weight percentage content accounting for the nickel-cobalt-manganese precursor coated by the lithium source, the usage amount of the aluminum oxide is 0.05~2%.

The temperatures of the second calcination process and the third calcination process are changed with the ratio of the substance amounts of the nickel, cobalt, and manganese in the newly prepared nickel-cobalt-manganese cathode electrode material. In a preferred embodiment, while the dopant is the zinc oxide, the doping amount is 1%, and the ratio of the substance amounts of the nickel, cobalt, and manganese in the newly prepared ternary cathode electrode material is 1:1:1, the temperature of the second calcination process is 900~1050°C, and the calcination time is 8~20 h; while the ratio of the substance amounts of the nickel, cobalt, and manganese in the newly prepared ternary cathode electrode material is 5:2:3, the temperature of the second calcination process is 900~1000°C, and the calcination time is 8~20 h; and while the ratio of the substance amounts of the nickel, cobalt, and manganese in the newly prepared ternary cathode electrode material is 8:1:1, the temperature of the second calcination process is 700~850°C, and the calcination time is 8~20 h. While the doping amount of the aluminum oxide is 0.3%, the temperature of the third calcination process is 400~600°C, and the time is 3~10 h.

In a preferred embodiment, the above lithium source coating process may generate a certain amount of lithium-containing mother solution, so the above recovery method for the waste nickel-cobalt-manganese cathode electrode material further includes: a step of recovering the lithium element in the lithium-containing mother solution. Preferably, a trisodium phosphate, a sodium dihydrogen phosphate or an ammonium dihydrogen phosphate or the like is added to the lithium-containing mother solution to precipitate and recover a small amount of lithium ions remaining in the mother solution.

On the other hand, the present application further provides a nickel-cobalt-manganese cathode electrode material, the nickel-cobalt-manganese cathode electrode material includes: an inner core layer, a first coating layer and a second coating layer, the first coating layer is coated on the surface of the inner core layer, and the second coating layer is coated on the surface of the first coating layer; herein, the inner core layer is a waste nickel-cobalt-manganese cathode electrode material, the first coating layer is a nickel-cobalt-manganese ternary hydroxide precursor, and the second coating layer is a lithium source coating layer; or the nickel-cobalt-manganese cathode electrode material is prepared by the above recovery method for the waste nickel-cobalt-manganese cathode electrode material.

The nickel-cobalt-manganese cathode electrode material with the above structure achieves the electrical properties of the existing cathode electrode material, and at the same time, the above nickel-cobalt-manganese cathode electrode material uses the waste nickel-cobalt-manganese cathode electrode material as the raw material to achieve the optimal allocation of resources, and the preparation cost thereof is greatly reduced. On the other hand, the above recovery method is short in process, and simple in treatment method, so the cost and preparation period of the process may also be reduced further.

The present application is further described in detail below with reference to specific embodiments, and these embodiments should not be construed as limiting a scope of protection claimed by the present application.

### Embodiment 1

A recovery method for a waste nickel-cobalt-manganese cathode electrode material includes:
1) Disassembling and peeling: an 811 polycrystalline lithium battery (the ratio of the mole numbers of nickel, cobalt and manganese in the nickel-cobalt-manganese cathode electrode material is 8:1:1) was disassembled, and then a cathode electrode piece was calcined and peeled in a high-temperature furnace of 500°C (first calcination process), the calcination time was 5 h, and a carbon material, a diaphragm, an electrolyte, and a binder were removed together, to obtain a first calcined product (cathode electrode material).
2) Acid dissolution peeling: a concentrated sulfuric acid (the concentration of the concentrated sulfuric acid is 98wt%) accounting for 3wt% of the cathode electrode material was added to the obtained cathode electrode material, and then a hydrogen peroxide reagent (the concentration is 30wt%) accounting for 2% of the total volume of a reaction system was added, the acid dissolution peeling was performed at 50°C for 1 h.
3) Wet-type grinding: after solid-liquid separation, and water washing, a wet material was ball-milled to a particle size of 1~5 µm, pure water was added and it was slurried into a slurry with a solid content of 100 g/L.
4) Precursor synthesis: the above slurry was transferred to a reaction kettle and a stirring blade is submerged at a fixed volume, an appropriate amount of sodium hydroxide and ammonia water wereadded to adjust pH of the system to 10~11; it was stirred and heated to 55°C, and 2 mol/L of nickel-cobalt-manganese sulfate solution (the ratio of mole numbers of nickel, cobalt, and manganese three elements was 8:1:1) was added, 6 mol/L of liquid caustic soda and 8 mol/L of ammonia water perform a precipitation reaction (the temperature of the precipitation reaction was 55°C), the reaction was continued for 65 h, to obtain a precursor with a particle size of 9.8 µm, it was settled for 30 min, and a half of a supernatant was extracted.
5) Lithium coating: 100 g/L of a sodium carbonate and 120 g/L of lithium hydroxide solution were added to the system jointly, the stirring speed was adjusted to 150 rpm, a lithium hydroxide and a sodium carbonate which were 110% of the theoretical amount were added within 2 h and aged for 1 h, to obtain a new-type lithium-coated ternary precursor.
6) Cathode electrode material calcination: According to a sintering process of the nickel-cobalt-manganese cathode electrode material of which the ratio of the mole numbers of the nickel, cobalt, and manganese three elements was 8:1:1, zinc oxide doping (the doping amount was 1%) was performed, and second calcination treatment was performed at 750°C, the calcination time was 15 h; and then third calcination treatment was performed at 500°C, aluminum oxide (the amount was 0.3%) coating was performed at the same time, and the calcination time was 8h, to obtain a cathode electrode material finished product.
7) Mother solution recovery: enough sodium dihydrogen phosphate and an appropriate amount of liquid alkali were added to lithium-containing mother solution to adjust pH to 12.0, as to precipitate the lithium element, and then it was dehydrated and dried to preserve a lithium phosphate raw material.
8) Electrical performance detection: a button battery was assembled and the electrochemical performance was detected, a specific method was as follows.

In the electrolyte, ethylene carbonate/dimethyl carbonate (EC/DMC) was used as a solvent, and the content of lithium hexafluorophosphate was 1.0 mol/L. The cathode electrode material finished product prepared in the present application was mixed with a carbon black conductive agent (SP), a carbon nanotube (CNT), and a polyvinylidene fluoride (PVDF) in a weight ratio of 80:5:5:10, and N-methylpyrrolidone (NMP) was used as a solvent for slurrying and stirring for 6 hours, to obtain a slurry.

Then, the above slurry was blade-coated on an aluminum foil with a preparation device, and after drying, an electrode piece was prepared. Then, a lithium piece was used as a counter electrode, the diaphragm was cellgarde2000, and the above electrolyte was assembled into the button battery in the order of negative electrode housing - electrode piece - electrolyte - diaphragm - electrode piece - cathode electrode housing, the specification was 2032. Then a Wuhan Landian LAND2000 tester was used to perform a charge and discharge test at 4.3 V. Test results show that: a 0.1 C gram capacity of the product was 215 mAh, a 50-cycle capacity retention rate was 99.5% at 25°C of a room temperature, and it was basically consistent with other cathode electrode materials, so it was proved that this method was feasible.

### Embodiment 2

A recovery method for a waste nickel-cobalt-manganese cathode electrode material includes:
1) Disassembling and peeling: a 523 polycrystalline lithium battery (the ratio of the mole numbers of nickel, cobalt and manganese in the nickel-cobalt-manganese cathode electrode material was 5:2:3) after 1500 cycles was disassembled, and then a cathode electrode piece was calcined and peeled in a high-temperature furnace of 600°C (first calcination process), the calcination time was 5 h, and a carbon material, a diaphragm, an electrolyte, and a binder were removed together, to obtain a first calcined product (cathode electrode material).
2) Acid dissolution peeling: a concentrated sulfuric acid (the concentration of the concentrated sulfuric acid was 98wt%) accounting for 2wt% of the cathode electrode material was added to the obtained cathode electrode material, and then a hydrogen peroxide reagent (the concentration of the hydrogen peroxide reagent was 30%) accounting for 3% of the total volume of a reaction system was added, the acid dissolution peeling was performed at 60°C for 2 h.
3) Wet-type grinding: after solid-liquid separation, and water washing, a wet material was ball-milled to a particle size of 1-5 µm, pure water was added and it was slurried into a slurry with a solid content of 80 g/L.
4) Precursor synthesis: the above slurry was transferred to a reaction kettle and a stirring blade was submerged at a fixed volume, an appropriate amount of sodium hydroxide and ammonia water were added to adjust pH of the system to 10-11; it was stirred and heated to 70°C, and 2 mol/L of nickel-cobalt-manganese sulfate solution (the ratio of mole numbers of nickel, cobalt, and manganese three elements was 5:2:3) was added, 8 mol/L of liquid caustic soda and 9 mol/L of ammonia water perform a precipitation reaction (the temperature of the precipitation reaction was 70°C), the reaction was continued for 40 h, to obtain a precursor with a particle size of 10.2 µm, it was settled for 30 min, and a half of a supernatant was extracted.
5) Lithium coating: 150 g/L of a sodium carbonate and 180 g/L of lithium hydroxide solution were added to the system jointly, the stirring speed was adjusted to 150 rpm, a lithium hydroxide and a sodium carbonate which were 108% of the theoretical amount were added within 2 h and aged for 1 h, to obtain a new-type lithium-coated ternary precursor.
6) Cathode electrode material calcination: According to a sintering process of the nickel-cobalt-manganese cathode electrode material of which the ratio of the mole numbers of the nickel, cobalt, and manganese three elements was 5:2:3, second calcination treatment (the doping amount of a zinc oxide was 1%) was performed at 980°C, and the calcination time was 15 h, to obtain a cathode electrode material finished product.
7) Mother solution recovery: enough sodium dihydrogen phosphate and an appropriate amount of liquid alkali were added to lithium-containing mother solution to adjust pH to 12.0, as to precipitate the lithium element, and then it was dehydrated and dried to preserve a lithium phosphate raw material.
8) Electrical performance detection: a button battery was assembled and the electrochemical performance was detected, it was tested at 4.3 V, a 0.1 C gram capacity of an obtained product was 157 mAh, a 50-cycle capacity retention rate was 99.8% at 25°C of a room temperature, and it was basically consistent with other cathode electrode materials, so it was proved that this method was feasible.

### Embodiment 3

A recovery method for a waste nickel-cobalt-manganese cathode electrode material includes:
1) Disassembling and peeling: a 111 polycrystalline lithium battery (the ratio of the mole numbers of nickel, cobalt and manganese in the nickel-cobalt-manganese cathode electrode material was 1:1:1) was disassembled, and then a cathode electrode piece was calcined and peeled in a high-temperature furnace of 650°C (first calcination process), the calcination time was 2 h, and a carbon material, a diaphragm, an electrolyte, and a binder were removed together, to obtain a first calcined product (cathode electrode material).
2) Acid dissolution peeling: a concentrated sulfuric acid (the concentration of the concentrated sulfuric acid was 98wt%) accounting for 4wt% of the cathode electrode material was added to the obtained cathode electrode material, and then a hydrogen peroxide reagent (the concentration of the hydrogen peroxide reagent was 30%) accounting for 3% of the total volume of a reaction system was added, the acid dissolution peeling was performed at 40°C for 2 h.
3) Wet-type grinding: after solid-liquid separation, and water washing, a wet material was ball-milled to a particle size of 1-5 µm, pure water was added and it was slurried into a slurry with a solid content of 60 g/L.
4) Precursor synthesis: the above slurry was transferred to a reaction kettle and a stirring blade was submerged at a fixed volume, an appropriate amount of sodium hydroxide and ammonia water were added to adjust pH of the system to 10-11; it was stirred and heated to 60°C, and 1.5 mol/L of nickel-cobalt-manganese sulfate solution (the ratio of mole numbers of nickel, cobalt, and manganese three elements was 1:1:1) was added, 5 mol/L of liquid caustic soda and 7 mol/L of ammonia water perform a precipitation reaction (the temperature of the precipitation reaction was 60°C), the reaction was continued for 30 h, to obtain a precursor with a particle size of 10.5 µm, it was settled for 30 min, and a half of a supernatant was extracted.
5) Lithium coating: 200 g/L of a sodium carbonate and 200 g/L of lithium hydroxide solution were added to the system jointly, the stirring speed was adjusted to 100 rpm, a lithium hydroxide and a sodium carbonate which were 105% of the theoretical amount were added within 2 h and aged for 1 h, to obtain a new-type lithium-coated ternary precursor.
6) Cathode electrode material calcination: According to a sintering process of the nickel-cobalt-manganese cathode electrode material of which the ratio of the mole numbers of the nickel, cobalt, and manganese three elements was 1:1:1, second calcination treatment (the doping amount of a zinc oxide was 1%) was performed at 1000°C, and the calcination time was 15 h, to obtain a cathode electrode material finished product.
7) Mother solution recovery: enough sodium dihydrogen phosphate and an appropriate amount of liquid alkali were added to lithium-containing mother solution to adjust pH to 12.0, as to precipitate the lithium element, and then it was dehydrated and dried to preserve a lithium phosphate raw material.
8) Electrical performance detection: a button battery was assembled and the electrochemical performance was detected, it was tested at 4.3 V, a 0.1 C gram capacity of an obtained product was 148 mAh, a 50-cycle capacity retention rate was 99.9% at 25°C of a room temperature, and it was basically consistent with other cathode electrode materials, so it was proved that this method was feasible.

### Embodiment 4

A difference from Embodiment 1 was that: the temperature of the first calcination process was 300°C.

A 0.1 C gram capacity of a product was 165 mAh, and a 50-cycle capacity retention rate was 95.0% at 25°C of a room temperature.

### Embodiment 5

A difference from Embodiment 1 was that: the temperature of the first calcination process was 800°C.

A 0.1 C gram capacity of a product was 202 mAh, and a 50-cycle capacity retention rate was 97.0% at 25°C of a room temperature.

### Embodiment 6

A difference from Embodiment 1 was that: a hydrogen peroxide was not added in the acid dissolution peeling process.

A 0.1 C gram capacity of a product was 195 mAh, and a 50-cycle capacity retention rate was 93.3% at 25°C of a room temperature.

### Embodiment 7

A difference from Embodiment 1 was that: in the acid dissolution peeling process, calculated in weight percentage content accounting for a first calcined product, the addition amount of a concentrated sulfuric acid was 10wt%, and calculated in percentage content accounting for the total volume of a reaction system, the addition amount of a hydrogen peroxide was 0.5vol%.

A 0.1 C gram capacity of a product was 199 mAh, and a 50-cycle capacity retention rate was 96.2% at 25°C of a room temperature.

### Embodiment 8

A difference from Embodiment 1 was that: the temperature of a precipitation reaction was 30°C.

A 0.1 C gram capacity of a product was 188 mAh, and a 50-cycle capacity retention rate was 97.4% at 25°C of a room temperature.

### Embodiment 9

A difference from Embodiment 1 was that: in the acid dissolution peeling process, calculated in weight percentage content accounting for a first calcined product, the addition amount of a concentrated sulfuric acid was 1wt%, and calculated in percentage content accounting for the total volume of a reaction system, the addition amount of a hydrogen peroxide was 5vol%.

A 0.1 C gram capacity of a product was 210 mAh, and a 50-cycle capacity retention rate was 98.5% at 25°C of a room temperature.

### Embodiment 10

A difference from Embodiment 1 was that: in the acid dissolution peeling process, calculated in weight percentage content accounting for a first calcined product, the addition amount of a concentrated sulfuric acid (the concentration was 98wt%) was 5wt%, and calculated in percentage content accounting for the total volume of a reaction system, the addition amount of a hydrogen peroxide (the concentration was 30wt%) was 1vol%.

A 0.1 C gram capacity of a product was 210 mAh, and a 50-cycle capacity retention rate was 97.7% at 25°C of a room temperature.

### Contrast example 1

A difference from Embodiment 1 was that: the cathode electrode material obtained by disassembling peeling and acid dissolution peeling was reparatively sintered with a lithium hydroxide, to obtain a new ternary cathode electrode material, herein the reparative sintering temperature was 800°C, and the addition amount of the lithium hydroxide was 110% of the theoretical addition amount.

A 0.1 C gram capacity of a product was 190 mAh, and a 50-cycle capacity retention rate was 75.1% at 25°C of a room temperature.

From the above descriptions, it may be seen that the above embodiments of the present disclosure achieve the following technical effects.

Comparing Embodiments 1 to 10 and Contrast example 1, it may be seen that the recovery method provided by the present application is beneficial to improve the electrical properties of the newly prepared cathode electrode material.

Comparing Embodiments 1, 4 to 5, it may be seen that limiting the temperature of the first calcination process within the preferred range of the present application is beneficial to further improve the electrical properties of the newly prepared cathode electrode material.

Comparing Embodiments 1, 6, 7, 9 and 10, it may be seen that limiting the concentration of the sulfuric acid and the hydrogen peroxide within the preferred range of the present application is beneficial to further improve the electrical properties of the newly prepared cathode electrode material.

It should be noted that terms "first", "second" and the like in the description and claims of the present application are used to distinguish similar objects, and are not necessarily used to describe a specific sequence or a precedence order. It is to be understood that the terms so used are interchangeable under appropriate circumstances, such that the embodiments of the present application described herein may, for example, be implemented in a sequence other than those described herein.

The above are only preferred embodiments of the present invention, and are not intended to limit the present invention. For those skilled in the art, the present invention may have various modifications and changes. Any modifications, equivalent replacements, improvements and the like made within the spirit and principle of the present invention shall be included within a scope of protection of the present invention.

## Claims

1. A recovery method for a waste nickel-cobalt-manganese cathode electrode material, wherein the recovery method for the waste nickel-cobalt-manganese cathode electrode material comprises:
crushing the waste nickel-cobalt-manganese cathode electrode material, to obtain a granular material;
using the granular material as a crystal seed, and performing a precipitation reaction in solution containing a nickel source, a cobalt source and a manganese source, to obtain a nickel-cobalt-manganese precursor; and
coating the surface of the nickel-cobalt-manganese precursor with a lithium source, to form a new nickel-cobalt-manganese ternary cathode electrode material.

2. The recovery method for the waste nickel-cobalt-manganese cathode electrode material according to claim 1, wherein after the crushing process, the particle size of the granular material is 1-5 pm; and
the recovery method for the waste nickel-cobalt-manganese cathode electrode material further comprises: disassembling and peeling a ternary cathode electrode piece, as to remove one or more of a carbon material, a diaphragm, an electrolyte and a binder contained in the ternary cathode electrode piece, to obtain the waste nickel-cobalt-manganese cathode electrode material.

3. The recovery method for the waste nickel-cobalt-manganese cathode electrode material according to claim 2, wherein the process of disassembling and peeling comprises:
performing first calcination treatment on the ternary cathode electrode piece, to obtain the waste nickel-cobalt-manganese cathode electrode material; and
the temperature of the first calcination treatment is 500~700°C, and the time is 2~8 h.

4. The recovery method for the waste nickel-cobalt-manganese cathode electrode material according to claim 3, wherein the process of disassembling and peeling comprises:
performing acid dissolution peeling on a product of the first calcination treatment, to obtain the waste nickel-cobalt-manganese cathode electrode material;
the acid dissolution peeling process comprises enabling the product of the first calcination treatment to react with a sulfuric acid and a hydrogen peroxide; and
the concentration of the sulfuric acid is 98wt%, and the addition amount is 1~5% of the product of the first calcination treatment; the concentration of the hydrogen peroxide is 30wt%, the amount is 1~5vol% of the total volume of a reaction system of the acid dissolution peeling, and the temperature of the acid dissolution peeling is 40~60°C.

5. The recovery method for the waste nickel-cobalt-manganese cathode electrode material according to any one of claims 1 to 4, wherein the precipitation process comprises:
preparing the granular material and water into 50~200 g/L of a slurry, and adjusting pH thereof to 10-11;
using sodium hydroxide and ammonia water as precipitants, performing a precipitation reaction on the slurry and the solution containing the nickel source, the cobalt source and the manganese source, to obtain the nickel-cobalt-manganese precursor, and the molar ratio of the nickel source, the cobalt source and the manganese source is the same as the molar ratio of nickel, cobalt, and manganese in the granular material; and
the ratio of the granular material, the total mole number of nickel, cobalt and manganese elements in the solution containing the nickel source, the cobalt source and the manganese source, the sodium hydroxide and the ammonia water is (50~200) g: (0.5~2) mol: (5~10) mol: (8~12) mol.

6. The recovery method for the waste nickel-cobalt-manganese cathode electrode material according to claim 5, wherein the temperature of the precipitation reaction is 30~75°C, and the reaction time is 20~120 h.

7. The recovery method for the waste nickel-cobalt-manganese cathode electrode material according to claim 5, wherein the lithium source coating process comprises: performing aging treatment on the nickel-cobalt-manganese precursor, a lithium hydroxide and a soluble carbonate, to obtain the new nickel-cobalt-manganese ternary cathode electrode material.

8. The recovery method for the waste nickel-cobalt-manganese cathode electrode material according to claim 7, wherein a preparation method for the new nickel-cobalt-manganese ternary cathode electrode material further comprises:
performing second calcination treatment on the nickel-cobalt-manganese precursor coated by the lithium source and a dopant, to obtain a doped product; and
performing third calcination treatment on the doped product and an aluminum oxide, to obtain the new nickel-cobalt-manganese ternary cathode electrode material.

9. The recovery method for the waste nickel-cobalt-manganese cathode electrode material according to claim 8, wherein the dopant is selected from one or more in a group consisting of a zinc oxide, a titanium oxide, a scandium oxide, an aluminum oxide, a magnesium oxide and a gallium oxide;
calculated in weight percentage content accounting for the nickel-cobalt-manganese precursor coated by the lithium source, the usage amount of the dopant is 0.05~2%;and
in the third calcination treatment, calculated in weight percentage content accounting for the nickel-cobalt-manganese precursor coated by the lithium source, the usage amount of the aluminum oxide is 0.05~2%.

10. A nickel-cobalt-manganese cathode electrode material, wherein the nickel-cobalt-manganese cathode electrode material comprises:
an inner core layer;
a first coating layer, wherein the first coating layer is coated on the surface of the inner core layer; and
a second coating layer, wherein the second coating layer is coated on the surface of the first coating layer;
wherein, the inner core layer is a waste nickel-cobalt-manganese cathode electrode material, the first coating layer is a nickel-cobalt-manganese ternary hydroxide precursor, and the second coating layer is a lithium source coating layer; or the nickel-cobalt-manganese cathode electrode material is prepared by the recovery method for the waste nickel-cobalt-manganese cathode electrode material according to any one of claims 1 to 9.
